# EUROPÄISCHE PATENTSCHRIFT

(11) **EP 1 656 406 B1**
(45) Veröffentlichungstag und Bekanntmachung des Hinweises auf die Patenterteilung: **15.02.2012**
(21) Anmeldenummer: 04741045.1
(22) Anmeldetag: 15.07.2004
(51) Int. Cl.: C08G 18/48, C08G 18/50, C08G 65/26

(54) **VERFAHREN ZUR HERSTELLUNG VON AUTOKATALYTISCHEN POLYETHERALKOHOLEN**
DEVICE FOR PRODUCING POLYETHER ALCOHOLS
PROCEDE POUR PRODUIRE DES POLYETHER-ALCOOLS

(30) Priorität: 12.08.2003 DE 10337319
(43) Veröffentlichungstag der Anmeldung: 17.05.2006
(73) Patentinhaber: BASF SE, 67056 Ludwigshafen (DE)
(72) Erfinder: BLEUEL, Elke, 01127 Dresden (DE); WETTERLING, Monika, 01968 Senftenberg (DE); SCHUSTER, Marita, 32351 Stemwede-Haldem (DE); TEMPLIN, Markus, 49448 Lemförde (DE); RODEWALD, Dieter, 67063 Ludwigshafen (DE)
(86) Internationale Anmeldenummer: PCT/EP2004/007864
(87) Internationale Veröffentlichungsnummer: WO 2005/014685

(56) Entgegenhaltungen:
- EP-A- 0 539 819
- EP-A- 0 708 126
- WO-A-02/50161
- DD-A- 147 469

## Beschreibung

Polyetheralkohole sind seit langem bekannt und vielfach in der Literatur beschrieben. Sie werden insbesondere durch Umsetzung mit Polyisocyanaten zu Polyurethanen weiterverarbeitet. Ihre Herstellung erfolgt zumeist durch Anlagerung von Alkylenoxiden an niedermolekulare, aktive Wasserstoffatome enthaltende Startsubstanzen.

Eine besondere Klasse der Polyetheralkohole bilden solche, bei denen als Startsubstanzen Verbindungen mit Aminogruppen eingesetzt werden. Da tertiäre Aminogruppen die Polyurethanreaktion katalysieren, wirken derartige Polyetheralkohole sowohl als Aufbaukomponente für die Polyurethane als auch als Katalysator. Gegenüber herkömmlichen, niedermolekularen Aminkatalysatoren haben derartige Polyetheralkohole, die häufig auch als autokatalytische Polyetheralkohole bezeichnet werden, den Vorteil, daß sie nicht aus den Schäumen migrieren können. Die Migration der Amine aus den Schaumstoffen führt zu einer starken Geruchsbelästigung und ist daher unerwünscht. Aus dem Stand der Technik ist eine Reihe von derartigen autokatalytischen Polyetheralkoholen bekannt.

Als Startsubstanzen für autokatalytische Polyetheralkohole können Verbindungen mit primären, sekundären und/oder tertiären Aminogruppen eingesetzt werden. Bei der Umsetzung mit den Alkylenoxiden werden die primären und sekundären Aminogruppen in tertiäre Aminogruppen umgewandelt. Zumeist gilt, dass die katalytische Aktivität von autokatalytischen Polyetheralkoholen, deren Startsubtanzen bereits tertiäre Aminogruppen enthielten, höher ist als die von solchen, bei denen die tertiären Aminogruppen erst durch die Umsetzung von primären oder sekundären Aminogruppen mit Alkylenoxiden gebildet wurden.

DD 235 878 beschreibt autokatalytische Polyetheralkohole, die durch Anlagerung von Alkylenoxiden an aliphatische Tetramine, die einen geringen Gehalt an tertiären Aminogruppen aufweisen, hergestellt werden. Dabei können, je nach den gewünschten Eigenschaften der Endprodukte, die Amine sofort mit der Gesamtmenge oder nacheinander mit mehreren Teilmengen des Alkylenoxids umgesetzt werden.

In WO 01/58976, WO 02/22702, WO 03/016372 und WO 03/29320 wird eine große Zahl von autokatalytischen Polyetheralkoholen beschrieben, die durch Anlagerung von Alkylenoxiden an unterschiedliche Amine hergestellt werden. Diese autokatalytischen Polyetheralkohole werden, vorzugsweise in Kombination mit anderen Polyolen, mit Isocyanaten zu Polyurethanen umgesetzt. Ihre Herstellung erfolgt nach üblichen Verfahren durch Anlagerung von Alkylenoxiden an die als Startsubstanz eingesetzten Amine.

Durch den Einsatz der autokatalytischen Polyetheralkohole kann die Geruchsbelästigung durch die als Katalysator eingesetzten Amine deutlich zurückgedrängt werden. Die nach den im Stand der Technik hergestellten autokatalytischen Polyetheralkohole enthalten jedoch immer noch Nebenprodukte, die zu Geruchsproblemen bei den Polyurethanen führen können. Außerdem hat sich gezeigt, daß die Alterungsbeständigkeit der mit den üblichen autokatalytischen Polyetheralkoholen hergestellten Polyurethane nicht ausreichend ist.

Es war die Aufgabe der vorliegenden Erfindung, autokatalytische Polyetheralkohole zu entwickeln, die frei von Nebenprodukten sind, einen geringen Geruch aufweisen und einfach herzustellen sind.

Die Aufgabe konnte überraschenderweise dadurch gelöst werden, dass man die als Startsubstanz eingesetzten Amine vor der Umsetzung mit den Alkylenoxiden in einem Lösungsmittel löst und In Lösung mit den Alkylenoxiden umsetzt.

Gegenstand der Erfindung ist demzufolge ein Verfahren zur Herstellung von autokatalytischen Polyetheralkoholen durch Umsetzung von H-funktionellen Startsubstanzen, die mindestens eine für die Urethan-Reaktion katalytisch aktive tertiäre Aminogruppe sowie mindestens eine mit Alkylenoxiden reaktive primäre und/oder sekundäre Aminogruppe und/oder Hydroxylgruppe, enthalten, mit Alkylenoxiden, umfassend die Schritte
a) Lösen der Startsubstanz in einem Lösungsmittel
b) Umsetzung der Lösung mit Alkylenoxiden.

Gegenstand der Erfindung sind auch die nach diesem Verfahren hergestellten Polyetheralkohole.

Gegenstand der Erfindung ist weiterhin ein Verfahren zur Herstellung von Polyurethanen durch Umsetzung von Polyisocyanaten mit Verbindungen mit mindestens zwei mit Urethangruppen reaktiven Wasserstoffatomen, dadurch gekennzeichnet, dass als Verbindungen mit mindestens zwei mit Urethangruppen reaktiven Wasserstoffatomen mindestens ein autokatalytischer Polyetheralkohol, herstellbar nach dem erfindungsgemäßen Verfahren, eingesetzt wird.

Als Lösungsmittel können beliebige organische Lösungsmittel eingesetzt werden. In einer Ausführungsform des erfindungsgemäßen Verfahrens werden als Lösungsmittel organische Lösungsmittel, die sich gegenüber Alkylenoxiden chemisch inert verhalten, eingesetzt.

Der Siedepunkt dieser inerten organischen Lösungsmittel wird vorzugsweise so gewählt, dass er unterhalb der Reaktionstemperatur der Umsetzung der Startsubstanz mit den Alkylenoxiden liegt. Insbesondere liegt der Siedepunkt bei einer Temperatur von mindestens 100°C. Beispiele für derartige organische Lösungsmittel sind Toluol, Monochlorbenzol, Diethylenglykoldimethylether und Triethylenglykoldimethylether,

Das Mischungsverhältnis von Startsubstanz zu Lösungsmittel liegt vorzugsweise im Bereich zwischen 1:20 bis 20:1, besonders bevorzug zwischen 1:1 bis 1:10, und insbesondere zwischen 1:1 bis 1:5 Gewichtsteilen.

Bei dieser Ausführungsform sollte nach der Umsetzung mit den Alkylenoxiden eine Entfernung des Lösungsmittels erfolgen, da dieses bei der Umsetzung der Polyetheralkohole zu Polyurethanen Störungen hervorrufen und seinerseits zu einer Geruchsbelästigung führen kann.

In einer bevorzugten Ausführungsform des erfindungsgemäßen Verfahrens werden als Lösungsmittel Polyetheralkohole eingesetzt. Als Polyetheralkohole können vorzugsweise die zur Herstellung von Polyurethanen üblichen und bekannten Produkte eingesetzt werden. Die bevorzugt eingesetzten Polyetheralkohole weisen eine Funktionalität im Bereich zwischen 2 und 8 und eine Hydroxylzahl im Bereich zwischen 20 und 1200 mgKOH/g auf. Die Auswahl des als Lösungsmittel eingesetzten Polyetheralkohols richtet sich vorzugsweise nach dem gewünschten Einsatzgebiet der autokatalytischen Polyetheralkohole. So ist es bei autokatalytischen Polyetheralkoholen, die zur Herstellung von Hartschaumstoffen eingesetzt werden sollen, bevorzugt, niedermolekulare und hochfunktionelle Polyetheralkohole einzusetzen. Derartige Produkte haben vorzugsweise eine Funktionalität im Bereich zwischen 3 und 8 und eine Hydroxylzahl im Bereich zwischen 200 und 1200 mgKOH/g. Derartige Produkte sind allgemein bekannt. Ihre Herstellung erfolgt vorzugsweise durch Anlagerung von niederen Alkylenoxiden, insbesondere Ethylenoxid und/oder Propylenoxid, an alkoholische und/oder aminische Startsubstanzen, wie Glyzerin, Trimethylolpropan, oder Zucker wie beispielsweise Sucrose oder Sorbit. Bei autokatalytischen Polyetheralkoholen, die zur Herstellung von Weichschaumstoffen eingesetzt werden sollen, werden vorzugsweise zwei- bis dreifunktionelle Polyetheralkohole mit einer Hydroxylzahl im Bereich zwischen 20 und 200 mgKOH/g, insbesondere 20 und 100 mgKOH/g eingesetzt. Auch derartige Produkte sind allgemein bekannt. Ihre Herstellung erfolgt vorzugsweise durch Anlagerung von niederen Alkylenoxiden, insbesondere Ethylenoxid und/oder Propylenoxid, an zwei- und dreifunktionelle Alkohole, wie Glycerin, Trimethylolpropan, Ethylenglykol und seine Homologen und Propylenglykol und seine Homologen.

Überraschenderweise kommt es bei dieser Ausführungsform des erfindungsgemäßenMVerfahrens zu einer weitgehend selektiven Anlagerung der Alkylenoxide an die H-funktionellen Startsubstanzen, die mindestens eine primäre, sekundäre oder tertiäre Aminogruppe enthalten.

Dies führt zum einen zu einer engen Molgewichtsverteilung des autokatalytischen Polyetheralkohols. Außerdem werden Nebenreaktionen bei der Anlagerung der Alkylenoxide an aminischen Startsubstanzen deutlich unterdrückt.

Bei der Verwendung von Polyetheralkoholen als Lösungsmittel sind unterschiedliche Ausführungsformen des Verfahrens möglich.

In einer Ausführungsform wird ein vollständig aufgearbeiteter und gereinigter Polyetheralkohol eingesetzt. Dabei kann die Anlagerung der Alkylenoxide an die aminische Startsubstanz ohne den Zusatz von weiteren Katalysatoren nur unter Ausnutzung der katalytischen Eigenschaften der Startsubstanz durchgeführt werden. Diese Ausführungsform hat den Vorteil, daß eine Aufarbeitung des Polyetheralkohols nach der Anlagerung der Alkylenoxide nicht erforderlich ist. Nachteilig ist hierbei die geringere Reaktionsgeschwindigkeit der Anlagerung. Durch Zusatz von basischen Katalysatoren kann die Reaktionsgeschwindigkeit erhöht werden, in diesem Falle ist jedoch zumeist eine nachträgliche Entfernung des basischen Katalysators erforderlich.

In einer anderen, bevorzugten Ausführungsform des erfindungsgemäßen Verfahrens wird als Lösungsmittel ein ungereinigter Polyetheralkohol verwendet, der noch basischen Katalysator enthält. Bei dem basischen Katalysator handelt es sich um einen der üblichen, zur Herstellung von Polyetheralkoholen eingesetzten alkalischen Katalysatoren, beispielsweise Cäsiumhydroxid, Natriumhydroxid und insbesondere Kaliumhydroxid. Der genannte Katalysator liegt dabei zumeist in einer Menge von 0.1 bis 3.0 Gew.-%, bezogen auf das Gewicht des ungereinigten Polyetheralkohols, vor.

Nach der Anlagerung der Alkylenoxide und einer sich üblicherweise daran anschlie-βenden Nachreaktionszeit zum vollständigen Umsatz der Alkylenoxide wird der erhaltene autokatalytische Polyetheralkohol wie üblich durch Neutralisation des basischen Katalysators und Abtrennung der erhaltenen Salze aufgearbeitet.

Das Mischungsverhältnis von Startsubstanz zu Polyetheralkohol liegt vorzugsweise zwischen 1:20 und 20:1, besonders bevorzugt 1:1 bis 1:10, und insbesondere zwischen 1:1 bis 1:5 Gewichtsteilen.

Als aminische Startsubstanzen können, wie ausgeführt, alle Amine eingesetzt werden, durch welche die Urethan-Reaktion katalysiert wird. Vorzugsweise werden Verbindungen mit mindestens einer tertiären Aminogruppe, insbesondere einer Dialkylaminogruppe, sowie mindestens einer funktionellen Gruppe, die mit Alkylenoxiden umgesetzt werden kann, eingesetzt. Bei den funktionellen Gruppen, die mit Alkylenoxiden umgesetzt werden können, kann es sich um alle H-funktionellen Gruppen handeln. Vorzugsweise handelt es sich um Hydroxylgruppen oder primäre und/oder sekundäre Aminogruppen.

Als aminische Startsubstanzen können prinzipiell alle die Verbindungen eingesetzt werden, die beispielsweise in WO 01/58976, WO 02/22702, WO 03/016372 und WO 03/29320 beschrieben werden.

Bevorzugt als aminische Startsubstanzen eingesetzt werden aliphatische Amine mit mindestens einer tertiären Aminogruppe und einer H-funktionellen Gruppierung.

Vorzugsweise ist die aminische Startsubstanz ausgewählt aus der Gruppe, enthaltend Dimethylaminoethylamin, Dimethylaminopropylamin, Diethylaminoethylamin, Diethylaminopropylamin, N-(3-Dimethylaminopropyl-N,N-diisopropanolamin, Dimethylethanolamin, N,N,N'-Trimethyl-N'-hydroxyethyl-bis(aminoethyl)ether, N,N-Bis-(3-dimethylaminopropyl)amino-2-propanolamin, Bis-(N,N-dimethyl-3-aminopropyl)amin, N,N-Dimethylaminoethoxyethanol, N-(3-Aminopropyl)imidazol , N-(2-Dimethylaminoethyl-)N-methylethanolamin, N-(2-Hydroxypropyl)imidazol, Dimethylaminohexanol sowie Gemische aus mindestens zwei der genannten Verbindungen.

Das erfindungsgemäße Verfahren wird vorzugsweise so geführt, dass an jedes aktive Wasserstoffatom der aminischen Startsubstanz durchschnittlich 1 bis 8, bevorzugt 1 bis 6, insbesondere 2 bis 4 Moleküle des Alkylenoxids angelagert werden.

Die Umsetzung der Startsubstanz mit den Alkylenoxiden wird bei den hierfür üblichen Drücken im Bereich zwischen 0,1 und 1,0 MPa und den üblichen Temperaturen im Bereich zwischen 80 und 140 °C durchgeführt. An die Dosierung der Alkylenoxide schließt sich zumeist eine Nachreaktionsphase zum vollständigen Abreagieren der Alkylenoxide an. Zumeist ist die katalytische Aktivität der Amine ausreichend für die Anlagerung der Alkylenoxide. Falls erforderlich, können zusätzliche Katalysatoren zugesetzt werden. Dabei handelt es sich insbesondere um basische, vorzugsweise alkalische Katalysatoren.

Nach der Anlagerung der Alkylenoxide und der Nachreaktionsphase werden die Polyetheralkohole, sofern erforderlich, vom Katalysator befreit.

Die nach dem erfindungemäßen Verfahren hergestellten autokatalytischen Polyetheralkohole können allein, vorzugsweise in Verbindung mit anderen Verbindungen mit mindestens zwei mit Isocyanatgruppen reaktiven Wasserstoffatomen zu Polyurethanen umgesetzt werden.

Als Verbindung mit mindestens zwei aktiven Wasserstoffatomen die zusammen mit den erfindungsgemäßen autokatalytischen Polyetheralkoholen eingesetzt werden können, kommen insbesondere Polyesteralkohole und vorzugsweise Polyetheralkohole mit einer Funktionalität von 2 bis 8, insbesondere von 2 bis 6, vorzugsweise von 2 bis 4 und einem mittleren Molekulargewicht im Bereich von 400 bis 10000 g/mol, vorzugsweise 1000 bis 8000 g/mol, in Betracht. Der Gehalt der erfindungsgemäßen autokatalytischen Polyetheralkohole in den Verbindungen mit mindestens zwei mit Isocyanatgruppen reaktiven Wasserstoffatomen liegt vorzugsweise im Bereich zwischen 0.1 und 20 Gew.-%, besonders bevorzugt zwischen 0.5 und 10 Gew.-% bezogen auf das Gewicht aller Verbindungen mit mindestens zwei mit Isocyanatgruppen reaktiven Wasserstoffatomen.

Die Polyetheralkohole können nach bekannten Verfahren, zumeist durch katalytische Anlagerung von Alkylenoxiden, insbesondere Ethylenoxid und/oder Propylenoxid, an H-funktionelle Startsubstanzen, oder durch Kondensation von Tetrahydrofuran, hergestellt werden. Als H-funktionelle Startsubstanzen kommen insbesondere mehrfunktionelle Alkohole und/oder Amine zum Einsatz. Bevorzugt eingesetzt werden Wasser, zweiwertige Alkohole, beispielsweise Ethylenglykol, Propylenglykol, oder Butandiole, dreiwertige Alkohole, beispielsweise Glycerin oder Trimethylolpropan, sowie höherwertige Alkohole, wie Pentaerythrit, Zuckeralkohole, beispielsweise Sucrose, Glucose oder Sorbit. Bevorzugt eingesetzte Amine sind aliphatische Amine mit bis zu 10 Kohlenstoffatomen, beispielsweise Ethylendiamin, Diethylentriamin, Propylendiamin, sowie Aminoalkohole, wie Ethanolamin oder Diethanolamin. Als Alkylenoxide werden vorzugsweise Ethylenoxid und/oder Propylenoxid eingesetzt, wobei bei Polyetheralkoholen, die für die Herstellung von Polyurethan-Weichschäumen verwendet werden, häufig am Kettenende ein Ethylenoxidblock angelagert wird. Als Katalysatoren bei der Anlagerung der Alkylenoxide kommen insbesondere basische Verbindungen zum Einsatz, wobei hier das Kaliumhydroxid die größte technische Bedeutung hat. Wenn der Gehalt an ungesättigten Bestandteilen in den Polyetheralkoholen gering sein soll, können als Katalysatoren auch Multimetallcyanidverbindungen, sogenannte DMC-Katalysatoren, eingesetzt werden.

Für bestimmte Einsatzgebiete, insbesondere zur Erhöhung der Härte in Polyurethan-Weichschaumstoffen, können auch sogenannte polymermodifizierte Polyole verwendet werden. Derartige Polyole können beispielsweise durch in-situ Polymerisation von ethylenisch ungesättigten Monomeren, vorzugsweise Styrol und/oder Acrylnitril, in Polyetheralkoholen hergestellt werden. Zu den polymermodifizierten Polyetheralkoholen gehören auch Polyharnstoffdispersionen enthaltende Polyetheralkohole, die vorzugsweise durch Umsetzung von Aminen mit Isocyanaten in Polyolen hergestellt werden.

Zur Herstellung von Weichschäumen und Integralschäumen werden insbesondere zwei- und/oder dreifunktionelle Polyetheralkohole eingesetzt. Zur Herstellung von Hartschäumen werden insbesondere Polyetheralkohole eingesetzt, die durch Anlagerung von Alkylenoxiden an vier- oder höherfunktionelle Starter, wie Zuckeralkohole oder aromatische Amine hergestellt werden.

Zu den Verbindungen mit mindestens zwei aktiven Wasserstoffatomen gehören auch die Kettenverlängerungs- und Vernetzungsmittel, die gegebenenfalls mitverwendet werden können. Als Kettenverlängerungs- und Vernetzungsmittel werden vorzugsweise 2- und 3-funktionelle Alkohole mit Molekulargewichten unter 400 g/mol, insbesondere im Bereich von 60 bis 150 g/mol, verwendet. Beispiele sind Ethylenglykol, Propylenglykol, Diethylenglykol, Butandiol-1,4, Glycerin oder Trimethylolpropan. Als Vernetzungsmittel können auch Diamine eingesetzt werden. Falls Kettenverlängerungs- und Vernetzungsmittel eingesetzt werden, beträgt deren Menge vorzugsweise bis zu 5 Gew.-%, bezogen auf das Gewicht der Verbindungen mit mindestens zwei aktiven Wasserstoffatomen.

Als Polyisocyanate können die üblichen und bekannten aromatischen Di- und Polyisocyanate einzeln oder in beliebigen Gemischen untereinander eingesetzt werden. Beispiele für aromatische Di- oder Polyisocyanate sind 2,4-Toluylendiisocyanat (2,4-TDI), 2,6-Toluylendiisocyanat (2,6-TDI), 2,4'-Diphenylmethandiisocyanat (2,4'-MDI), 4,4'-Diphenylmethandiisocyanat (4,4'-MDI), Polyphenylpolymethylenpolyisocyanate, wie sie durch Kondensation von Anilin und Formaldehyd und anschliessende Phosgenierung hergestellt werden (Polymer-MDI), p-Phenylendiisocyanat, Toluidindiisocyanat, Xylylendiisocyanat oder 1,5-Naphthylendiisocyanat (NDI).

Vorzugsweise werden gemeinsam mit oder an Stelle von diesen monomeren Isocyanaten oder deren Gemischen daraus hergestellte Oligo- oder Polyisocyanate, sogenannte Prepolymere, insbesondere auf Basis von TDI und MDI, eingesetzt. Diese Oligo- oder Polyisocyanate lassen sich aus den genannten Di- oder Polyisocyanaten oder deren Mischungen und gegebenenfalls Mono- oder Polyalkoholen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen. Vorzugsweise werden hier Urethan-, Allophanat-, Carbodiimid-, Uretonimin-, Biuret- oder Isocyanuratgruppen aufweisende Polymere aus TDI oder MDI sowie gegebenenfalls Mono- oder Polyalkohole verwendet.

Zur Herstellung der Polyurethane können weitere Einsatzstoffe, insbesondere weitere Katalysatoren, Treibmittel sowie Hilfs- und/oder Zusatzstoffe mitverwendet werden, zu denen im einzelnen folgendes zu sagen ist:

Als Katalysatoren für die Herstellung der erfindungsgemäßen Polyurethan-Schaumstoffe können in Kombination mit den autokatalytischen Poyetheralkoholen die üblichen und bekannten Polyurethanbildungskatalysatoren eingesetzt werden, beispielsweise organische Zinnverbindungen, wie Zinndiacetat, Zinndioctoat, Dialkylzinndilaurat, und/oder stark basische Amine wie Triethylamin, Pentamethyldiethylentriamin, Tetramethyldiaminoethylether, Imidazole oder vorzugsweise Triethylendiamin. Die Katalysatoren werden vorzugsweise in einer Menge von 0,01 bis 5 Gew.-%, vorzugsweise 0,05 bis 2 Gew.-%, eingesetzt.

Als Treibmittel zur Herstellung der Polyurethan-Schaumstoffe wird bevorzugt Wasser eingesetzt, das mit den Isocyanatgruppen unter Freisetzung von Kohlendioxid reagiert. Gemeinsam mit oder an Stelle von Wasser können auch physikalisch wirkende Treibmittel, beispielsweise Kohlendioxid, Kohlenwasserstoffe, wie n-, iso- oder Cyclopentan, Cyclohexan oder halogenierte Kohlenwasserstoffe, wie Tetrafluorethan, Pentafluorpropan, Heptafluorpropan, Pentafluorbutan, Hexafluorbutan oder Dichlormonofluorethan, eingesetzt werden. Die Menge des physikalischen Treibmittels liegt dabei vorzugsweise im Bereich zwischen 1 bis 15 Gew.-%, insbesondere 1 bis 10 Gew.-%, die Menge an Wasser vorzugsweise im Bereich zwischen 0,5 bis 10 Gew.-%, insbesondere 1 bis 5 Gew.-%.

Als Hilfsmittel und/oder Zusatzstoffe werden beispielsweise oberflächenaktive Substanzen, Schaumstabilisatoren, Zellregler, äußere und innere Trennmittel, Füllstoffe, Flammschutzmittel, Pigmente, Hydrolyseschutzmittel sowie fungistatisch und bakteristatisch wirkende Substanzen eingesetzt.

Bei der technischen Herstellung von Polyurethan-Schaumstoffen ist es üblich, die Verbindungen mit mindestens zwei aktiven Wasserstoffatomen und die weiteren Einsatzstoffe sowie Hilfs- und/oder Zusatzstoffe vor der Umsetzung zu einer sogenannten Polyolkomponente zu vereinigen.

Weitere Angaben über die verwendeten Ausgangsstoffe finden sich beispielsweise im Kunststoffhandbuch, Band 7, Polyurethane, herausgegeben von Günter Oertel, Carl-Hanser-Verlag, München, 3. Auflage 1993.

Zur Herstellung der erfindungsgemäßen Polyurethane werden die organischen Polyisocyanate mit den Verbindungen mit mindestens zwei aktiven Wasserstoffatomen in Anwesenheit der genannten Treibmittel, Katalysatoren und Hilfs- und/oder Zusatzstoffe, zumeist gemischt zu einer sogenannten Polyolkomponente, zur Reaktion gebracht.

Bei der Herstellung der Polyurethane werden Isocyanat- und Polyolkomponente in einer solchen Menge zusammengebracht, dass das Äquivalenzverhältnis von Isocyanatgruppen zur Summe der aktiven Wasserstoffatome 0,6 : 1 bis 1 : 1,4, vorzugsweise 0,7 : 1 bis 1 :1,20 beträgt.

Durch das erfindungsgemäße Verfahren der Herstellung der autokatalytischen Polyetheralkohole kommt es zu einer deutlichen Verringerung des Anteils an Nebenprodukten. Dies zeigt sich beispielsweise in einer verringerten Farbzahl der Polyetheralkohole. Dabei nimmt die Farbe mit steigender Verdünnung der aminischen Startsubstanz im Lösungsmittel ab. Weiterhin ist der Eigengeruch der nach dem erfindungsgemäßen Verfahren hergestellten Polyetheralkohole deutlich geringer als der von nach herkömmlichen Verfahren hergestellten autokatalytischen Polyetheralkoholen, auch unter normierten Bedingungen, das heißt, wenn diese herkömmlichen katalytischen Polyetheralkohole durch Zusatz von Polyetheralkoholen auf den gleichen Amingehalt verdünnt werden.

Ein wesentlicher zusätzlicher Vorteil der autokatalytischen Polyetheralkohole, bei denen als Lösungsmittel Polyetheralkohole eingesetzt wurden, liegt, neben der einfachen Herstellung, auch in einer Vereinfachung der Lagerhaltung und Logistik, da bei dieser Ausführungsform bereits der als Aufbaukomponente für die Polyurethane verwendete Polyetheralkohol katalytische Eigenschaften aufweist und somit kein zusätzlicher Katalysator eingesetzt werden muß. Durch das Herstellungsverfahren kommt es zu einer optimalen Verteilung des autokatalytischen Polyetheralkohols in dem als Lösungsmittel eingesetzten Polyetheralkohol.

Die Erfindung soll an den nachstehenden Beispielen näher erläutert werden.

### Beispiel 1a

102,2 g (1 mol) N,N-Dimethylaminopropylamin wurde in 100 g Chlorbenzol gelöst und mit 0,2 Gew.-% festem Kaliumhydroxid versetzt. Anschließend wurden 348,5 g (6 mol) Propylenoxid dosiert. Die Temperatur lag während der Dosierung des Propylenoxids zwischen 95 und 105°C, während der Nachreaktion bei 95°C. Danach wurde die Reaktionsmischung bei ca. 98°C eine Stunde Vakuum-gestrippt. Das Vakuum wurde mit Stickstoff gebrochen. Die Entfernung des Katalysators erfolgte durch Zugabe von Ambosol^{®} in 2 Gew.-% Wasser bei Raumtemperatur und anschließend eine Stunde Rühren bei 90°C. Danach wurde das Reaktionsgemisch filtriert und das Chlorbenzol durch Destillation entfernt.

### Beispiel 1b bis 1f

Analog Beispiel 1a wurden 102,2 g (1 mol) N,N-Dimethylaminopropylamin in 300 g, 500 g und 1000 g Chlorbenzol (Beispiele 1b, 1c, 1d) bzw. 100 g und 500 g Diglyme (Beispiele 1e und 1f) gelöst und mit 0,2 Gew.-% Kaliumhydroxid versetzt. Anschlie-βend wurden 348,5 g (6 mol) Propylenoxid dosiert. Die weitere Aufarbeitung erfolgte wie für Beispiel 1 a beschrieben mit Ambosol^{®}/Wasser 2%.

Die Produkte aus den Umsetzungen 1a bis 1f wurden GC-analytisch untersucht. Dabei zeigt sich, dass durch steigende Verdünnung bei der Propoxylierung des Aminstarters, das heißt weniger drastische Reaktionsbedingungen, die Menge an Nebenprodukten deutlich reduziert wird. Damit einhergehend ändert sich die Farbe der Produkte. Während die Muster aus Startverbindung und Lösungsmittel im Verhältnis 1:1 braun gefärbt sind, sind die Produkte mit Mischungsverhältnissen von 1: 5 und 1:10 gelb bzw. nur leicht gelblich gefärbt.

| Beispiel | Zielprodukt (Gew.-%) |
|---|---|
| 1a | 12,4 |
| 1b | 22,6 |
| 1c | 29,8 |
| 1d | 37,3 |
| 1e | 13,9 |
| 1f | 25,7 |

### Vergleichsbeispiel 2

614 g (2,5 mol) N,N-Bis-(3-dimethylaminopropyl)amino-2-propanolamin wurden mit 0,2 Gew.-% Kaliumhydroxid versetzt. Anschließend wurden über einen Zeitraum von 100 min bei 95 bis 105°C 291 g (5 mol) Propylenoxid zudosiert. Die Nachreaktion erfolgte bei 95°C. Anschließend wurde mit Ambosol^{®}/Wasser 2 % analog Beispiel 1a aufgearbeitet.

### Beispiel 3 (erfindungsgemäß)

540 g eines alkalischen Polyetheralkohols aus Glycerin, Propylenoxid und Ethylenoxid mit einer Gesamtalkalität von 0,29 %; einer Hydroxylzahl von 26,5 mg KOH/g und einer Funktionalität von 2,7 wurden mit 245 g (1 mol) N,N-Bis-(3-dimethylaminopropyl)-amino-2-propanolamin versetzt und das Gemisch ohne zusätzliche Katalyse mit 116 g (2 mol) Propylenoxid umgesetzt. Die Nachreaktion erfolgte bei 95°C. Anschließend wurde mit Ambosol^{®}/Wasser 2 % analog Beispiel 1 a aufgearbeitet.

### Beispiel 4

608 g eines alkalischen Polyetheralkohols aus Glycerin, Propylenoxid und Ethylenoxid mit einer Gesamtalkalität von 0,38 %, einer Hydroxylzahl von 25 mg KOH/g und einer Funktionalität von 2,7 wurden mit 102 g N,N-Dimethylaminopropylamin versetzt und das Gemisch ohne zusätzliche Katalyse mit 290 g Propylenoxid umgesetzt.

Das entstehende Polyetherol wurde auf übliche Weise aufgearbeitet und zur Herstellung von Polyurethan-Weichschaum eingesetzt, wobei es eine hervorragende katalytische Wirkung bei der Polyurethan-Reaktion zeigte.

### Beispiel 5

605 g alkalisches Polyol aus Beispiel 4 wurden mit 245 g Propylenoxid umgesetzt. Das entstehende Polyetherol wurde auf übliche Weise aufgearbeitet und zur Herstellung von Polyurethan-Weichschaum eingesetzt, wobei es eine hervorragende katalytische Wirkung bei der Polyurethan-Reaktion zeigte.

### Beispiel 6

1080 g alkalisches Polyol aus Beispiel 4 wurden mit 491 g N,N-Bis-(3-dimethylaminopropyl)-N-isopropanolamin versetzt, und ohne zusätzliche Katalyse mit 264 g Ethylenoxid umgesetzt.

Das entstehende Polyetherol wurde auf übliche Weise aufgearbeitet und zur Herstellung von Polyurethan-Weichschaum eingesetzt, wobei es eine hervorragende katalytische Wirkung bei der Polyurethan-Reaktion zeigte.

### Beispiel 7

1080 g alkalisches Polyol aus Beispiel 4 wurden mit 375 g Bis-(N,N-dimethyl-3-aminopropyl)amin versetzt, und ohne zusätzliche Katalyse zunächst mit 349 g Propylenoxid umgesetzt und anschließend ohne weitere Aufarbeitung mit 88 g Ethylenoxid umgesetzt.

Das entstehende Polyetherol wurde auf übliche Weise aufgearbeitet und zur Herstellung von Polyurethan-Weichschaum eingesetzt, wobei es eine hervorragende katalytische Wirkung bei der Polyurethan-Reaktion zeigte.

### Beispiel 8 (Vergleichsbeispiel)

Zur Herstellung eines Polyurethan-Halbhartschaums wurden eine Polyolkomponente aus 46 Gew.-Teilen Lupranol^{®} 2090 (Elastogran GmbH), 45 Gew.-Teilen Lupranol^{®} 2095 (Elastogran GmbH), 2 Gew.-Teilen 1,4-Butandiol, 0,5 Gew.-Teilen Triethanolamin, 3 Teilen eines linearen Polyesters (auf Basis Adipinsäure, Ethylenglykol, Butandiol und Lupranat^{®} M10R, OH-Zahl: 34), 0,3 Teilen eines Dimethylaminpropylamin gestarteten Polyproyplenglykols (OH-Zahl: 250), 0,5 Teilen eines Emulgators (auf Basis eines mit Lupranol^{®} 2046 und einem Polyethylenoxid-Derivat modifizierten Blockpolymeren aus Maleinsäureanhydrid und einem α-Olefin), 0,05 Teilen Tegostab^{®} B 8680 (Fa. Goldschmidt), 2 Teilen Wasser und 1 Teil des autokatalytischen Polyols aus Beispiel 2 mit einer Isocyanatkomponente bestehend aus einem Prepolymer (NCO-Gehalt: 28 %) aus Lupranat^{®} MI, Lupranat^{®} ME, Lupranat^{®} M 20 W und Lupranol^{®} 2047 (Elastrogan GmbH) bei einem Index von 0,96 vermischt und das aufschäumende Gemisch in eine auf 44°C temperierte Aluminiumform mit den Maßen 20 cm x 20 cm x 4 cm gegeben und ein Kissen mit der Dichte 100 kg/m³ erhalten. Untersuchung dieses Schaums nach der Prüfvorschrift VDA 278 ergab im VOC-Wert 20 ppm Emissionen von Molekülen, die Dimethylamingruppierungen enthielten.

### Beispiel 9 (erfindungsgemäß)

Schaumherstellung analog Beispiel 8, jedoch wurden anstelle des 1 Teils des autokatalytischen Polyols aus Beispiel 2 3,94 Teile des autokatalytischen Polyols aus Beispiel 3 eingesetzt.

Untersuchung dieses Schaums nach der Prüfvorschrift VDA 278 ergab im VOC-Wert 0 ppm Emissionen von Molekülen, die Dimethylamingruppierungen enthielten. Somit wird bei Einsatz von erfindungsgemäß hergestellten, autokatalytisch Polyolen die Aminemissionen im Schaum deutlich gesenkt.

## Patentansprüche

1. Verfahren zur Herstellung von autokatalytischen Polyetheralkoholen durch Umsetzung von H-funktionellen Startsubstanzen, die mindestens eine für die Urethan-Reaktion katalytisch aktive tertiäre Aminogruppe sowie mindestens eine mit Alkylenoxiden reaktive primäre und/oder sekundäre Aminogruppe und/oder Hydroxylgruppe, enthaltende Verbindungen, mit Alkylenoxiden, umfassend die Schritte
a) Lösen der Startsubstanz in einem Lösungsmittel
b) Umsetzung der Lösung mit Alkylenoxiden.

2. Ein Verfahren nach Anspruch 1, bei dem das Lösungsmittel ein Polyetheralkohol mit einer Hydroxylzahl von 20 bis 1200 mg KOH/g und einer Funktionalität von 2 bis 8 ist.

3. Ein Verfahren nach Anspruch 1, bei dem das Lösungsmittel ein Polyetheralkohol mit einer Hydroxylzahl von 20 bis 100 mg KOH/g und einer Funktionalität von 2 bis 3 ist.

4. Ein Verfahren nach Anspruch 1-3, bei dem als Lösungsmittel ein Polyetheralkohol, der nach der durch Anlagerung von Alkylenoxiden an H-funktionelle Startsubstanzen hergestellt unter alkalischer Katalyse hergestellt und bei dem der Katalysator nach der Anlagerung der Alkylenoxide nicht entfernt wurde, eingesetzt wird.

5. Verfahren nach Anspruch 1, **dadurch gekennzeichnet, dass** als Lösungsmittel organische Lösungsmittel, die sich gegenüber Alkylenoxiden chemisch inert verhalten, eingesetzt werden.

6. Verfahren nach Anspruch 1, **dadurch gekennzeichnet, dass** Schritt b) in Gegenwart eines alkalischen Katalysators erfolgt.

7. Verfahren nach Anspruch 1, **dadurch gekennzeichnet, dass** der Katalysator in Schritt b) in einer Menge von 0,1 bis 3,0 Gew.-%, bezogen auf das Gewicht aller H-funktionellen Startsubstanzen, eingesetzt wird.

8. Verfahren nach Anspruch 1 bis 4, **dadurch gekennzeichnet, dass** als Alkylenoxide vorwiegend Ethylenoxid, Propylenoxid und/oder Butylenoxid eingesetzt werden.

9. Verfahren nach Anspruch 1 bis 5, **dadurch gekennzeichnet, dass** als Startsubstanzen, die mindestens eine für die Urethan-Reaktion katalytisch aktive tertiäre Aminogruppe sowie mindestens eine mit Alkylenoxiden reaktive primäre und/oder sekundäre Aminogruppe und/oder Hydroxylgruppe, enthaltende Verbindungen ausgewählt sind aus der Gruppe, enthaltend Dimethylaminoethylamin, Dimethylaminopropylamin, Diethylaminoethylamin, Diethylaminopropylamin, N-(3-Dimethylaminopropyl-)N,N-diisopropanolamin, Dimethylethanolamin, N,N,N'-Trimethyl-N'-hydroxyethyl-bis(aminoethyl)ether, N,N-Bis-(3-dimethylaminopropyl)amino-2-propanolamin, Bis-(N,N-dimethyl-3-aminopropyl)amin, N,N-Dimethylaminoethoxyethanol, N-(3-Aminopropyl)imidazol, N-(2-Dimethylaminoethyl-)N-methylethanolamin, N-(2-Hydroxypropyl)imidazol, Dimethylaminohexanol sowie Gemische aus mindestens zwei der genannten Verbindungen eingesetzt werden.

10. Polyetheralkohole, herstellbar nach einem der Ansprüche 1 bis 6.

11. Verfahren zur Herstellung von Polyurethanen durch Umsetzung von Polyisocyanaten mit Verbindungen mit mindestens zwei mit Isocyanatgruppen reaktiven Wasserstoffatomen, **dadurch gekennzeichnet, dass** als Katalysator Polyetheralkohole nach Anspruch 9 eingesetzt werden.

## Claims

1. A process for preparing autocatalytic polyether alcohols by reacting H-functional starter substances comprising at least one tertiary amino group which is catalytically active in the urethane reaction and at least one primary and/or secondary amino group and/or hydroxyl group which is reactive toward alkylene oxides, with alkylene oxides, which comprises
a) dissolving the starter substance in a solvent,
b) reacting the solution with alkylene oxides.

2. A process according to claim 1, wherein the solvent is a polyether alcohol having a hydroxyl number of from 20 to 1200 mg KOH/g and a functionality of from 2 to 8.

3. A process according to claim 1, wherein the solvent is a polyether alcohol having a hydroxyl number of from 20 two 100 mg KOH/g and a functionality of from 2 to 3.

4. A process according to any of claims 1-3, wherein a polyether alcohol which has been prepared by addition of alkylene oxides onto H-functional starter substances in the presence of an alkaline catalyst and from which the catalyst has not been removed after the addition reaction of the alkylene oxides is used as solvent.

5. The process according to claim 1, wherein organic solvents which are chemically inert toward alkylene oxides are used as solvent.

6. The process according to claim 1, wherein step b) is carried out in the presence of an alkaline catalyst.

7. The process according to claim 1, wherein the catalyst in step b) is used in an amount of from 0.1 to 3.0% by weight, based on the weight of all H-functional starter substances.

8. The process according to any of claims 1 to 4, wherein predominantly ethylene oxide, propylene oxide and/or butylene oxide are used as alkylene oxides.

9. The process according to any of claims 1 to 5, wherein the starter substances comprising at least one tertiary amino group which is catalytically active in the urethane reaction and at least one primary and/or secondary amino group and/or hydroxyl group which is reactive toward alkylene oxides, are selected from the group consisting of dimethylaminoethylamine, dimethylaminopropylamine, diethylaminoethylamine, diethylaminopropylamine, N-(3-dimethylaminopropyl)-N,N-diisopropanolamine, dimethylethanolamine, N,N-dimethylaminoethyl N'-methyl-N'-hydroxyethylaminoethyl ether, N,N-bis(3-dimethylaminopropyl)amino-2-propanolamine, bis(N,N-dimethyl-3-aminopropyl)amine, N,N-dimethylaminoethoxyethanol, N-(3-aminopropyl)imidazole, N-(2-dimethylaminoethyl)-N-methylethanolamine,
N-(2-hydroxypropyl)imidazole, dimethylaminohexanol and mixtures of at least two of the compounds mentioned.

10. A polyether alcohol which can be prepared according to any of claims 1 to 6.

11. A process for producing polyurethanes by reacting polyisocyanates with compounds having at least two hydrogen atoms which are reactive toward isocyanate groups, wherein a polyether alcohol according to claim 9 is used as catalyst.

## Revendications

1. Procédé de préparation de polyétheralcools autocatalytiques par transformation de substances de départ à fonctionnalité H, qui contiennent au moins un groupe amino tertiaire catalytiquement actif pour la réaction d'uréthane ainsi qu'au moins un groupe amino primaire et/ou secondaire et/ou hydroxyle, réactif avec des oxydes d'alkylène, avec des oxydes d'alkylène, comprenant les étapes
a) dissolution de la substance de départ dans un solvant,
b) transformation de la solution avec des oxydes d'alkylène.

2. Procédé selon la revendication 1, dans lequel le solvant est un polyétheralcool présentant un indice d'hydroxyle de 20 à 1200 mg de KOH/g et une fonctionnalité de 2 à 8.

3. Procédé selon la revendication 1, dans lequel le solvant est un polyétheralcool présentant un indice d'hydroxyle de 20 à 100 mg de KOH/g et une fonctionnalité de 2 à 3.

4. Procédé selon la revendication 1-3, dans lequel on utilise, comme solvant, un polyétheralcool, qui a été préparé par addition d'oxydes d'alkylène sur des substances de départ à fonctionnalité H sous catalyse alcaline et dans lequel le catalyseur n'a pas été éliminé après l'addition des oxydes d'alkylène.

5. Procédé selon la revendication 1, **caractérisé en ce qu'**on utilise, comme solvant, des solvants organiques qui se comportent de manière chimiquement inerte par rapport aux oxydes d'alkylène.

6. Procédé selon la revendication 1, **caractérisé en ce que** l'étape b) est réalisée en présence d'un catalyseur alcalin.

7. Procédé selon la revendication 1, **caractérisé en ce qu'**on utilise le catalyseur dans l'étape b) en une quantité de 0,1 à 3,0% en poids, par rapport au poids de toutes les substances de départ à fonctionnalité H.

8. Procédé selon la revendication 1 à 4, **caractérisé en ce qu'**on utilise comme oxydes d'alkylène principalement de l'oxyde d'éthylène, de l'oxyde de propylène et/ou de l'oxyde de butylène.

9. Procédé selon la revendication 1 à 5, **caractérisé en ce que** les substances de départ, qui contiennent au moins un groupe amino tertiaire catalytiquement actif pour la réaction d'uréthane ainsi qu'au moins un groupe amino primaire et/ou secondaire et/ou un groupe hydroxyle, réactif avec des oxydes d'alkylène, sont choisies dans le groupe contenant la diméthylaminoéthylamine, la diméthylaminopropylamine, la diéthylaminoéthylamine, la diéthylaminopropylamine, la N-(3-diméthylaminopropyl-)N,N-diisopropanolamine, la diméthyléthanolamine, le N,N,N'-triméthyl-N'-hydroxyéthylbis(aminoéthyl)éther, la N,N-bis-(3-diméthylaminopropyl)amino-2-propanolamine, la bis-(N,N-diméthyl-3-aminopropyl)amine, le N,N-diméthylaminoéthoxyéthanol, le N- (3-aminopropyl)imidazole, la N-(2-diméthylaminoéthyl-)N-méthyléthanolamine, le N-(2-hydroxypropyl)imidazole, le diméthylaminohexanol ainsi que des mélanges d'au moins deux des composés mentionnés.

10. Polyétheralcools, pouvant être préparés selon l'une quelconque des revendications 1 à 6.

11. Procédé pour la préparation de polyuréthanes par transformation de polyisocyanates avec des composés comprenant au moins deux atomes d'hydrogène réactifs avec des groupes isocyanate, **caractérisé en ce qu'**on utilise, comme catalyseur, des polyétheralcools selon la revendication 9.
